# EUROPÄISCHE PATENTSCHRIFT

(11) **EP 0 833 090 B1**
(45) Veröffentlichungstag und Bekanntmachung des Hinweises auf die Patenterteilung: **06.11.2002**
(21) Anmeldenummer: 97109077.4
(22) Anmeldetag: 05.06.1997
(51) Int. Cl.: F16K 5/06

(54) **Kugelhahn**
Ball valve
Robinet à tournant sphérique

(30) Priorität: 25.09.1996 DE 19639282
(43) Veröffentlichungstag der Anmeldung: 01.04.1998
(73) Patentinhaber: Krause, Ralf, 47228 Duisburg (DE)
(72) Erfinder: Krause, Ralf, 47228 Duisburg (DE)
(74) Vertreter: Röther, Peter, Dipl.-Phys.

(56) Entgegenhaltungen:
- EP-A- 0 049 573
- DE-B- 1 148 421
- DE-C- 3 822 564
- DE-U- 8 808 574
- GB-A- 2 198 500
- US-A- 2 912 219
- US-A- 4 423 749

## Beschreibung

Die Erfindung betrifft einen Kugelhahn zur Absperrung von flüssige, gasförmige und feststoffbeladene Medien führenden Rohrleitungen großer Nennweiten, bestehend aus einem Gehäuse, in dem die mit mindestens einer Bohrung versehene, mittels einer Spindel im Gehäuse verdrehbar gelagerte Kugel angeordnet ist und in Strömungsrichtung vor und hinter der Kugel im Gehäuse ringförmige, die Anströmseite gegen die Abströmseite abdichtende Dichtungen und in Ebenen senkrecht zur Spindelachse oberhalb und unterhalb der Bohrung sowie oberhalb und unterhalb der in Strömungsrichtung vor und hinter der Kugel angeordneten Dichtungen je eine weitere Dichtung derart angeordnet ist, daß die von ihnen aufgespannten parallel zueinander liegenden Ebenen jeweils senkrecht auf den von den vor und hinter der Kugel angeordneten Dichtungen aufgespannten Ebenen liegen.

Ein derartiger Kugelhahn ist beispielsweise aus der DE 11 48 421 bekannt. Sie dienen als Absperrorgane für flüssige, gasförmige und feststoffbeladene Medien unter Druck und unter Vakuum. Der üblicherweise geradlinige kreisrunde Durchgang ermöglicht geringste Strömungswiderstände, da das Medium in einem glatten Rohr geführt wird. Die Abdichtung der bekannten Kugelhöhne erfolgt durch Ringkolben oder aber normalerweise durch Dichtringe aus unterschiedlichsten Materialien wie Weichdichtungen, Keramik, Hartmetall etc..

Diese Dichtringe befinden sich im Gehäuse direkt vor und hinter der Kugel (in Strömungsrichtung gesehen). Sie dichten die Anströmseite der Kugel gegen die Abströmseite ab, wenn die Kugel in Sperrstellung ist.

Bei dem bekannten Kugelhahn ist die Kugel innerhalb zweier Halbschalen in einem einteiligen Gehäuse gelagert. Zusätzlich zu dem gerade beschriebenen primären Dichtungssystem verfügt der vorbekannte Kugelhahn über ein zweites Dichtungssystem, welches die Zapfen der Kugel gegen das Gehäuse abdichten.

Zwischen dem primären und senkundären Dichtungssystem verbleibt ein Zwischenraum, auch Totraum genannt, in den (eventuell abrasives) Leitungsmedium gelangen kann.

Denn wird der Kugelhahn geöffnet, indem mittels der Spindel die Kugel um 90° aus der Sperrstellung verdreht wird, verliert die Kugeloberfläche zeitweise den Dichtkontakt mit den Dichtringen des primären Dichtungssystems. Da die Kugel nicht ohne Spiel im Gehäuse gelagert sein kann, befinden sich zwischen ihr und der Gehäusewand Toträume, die sich beim Schalten des Hahns mit Medium, das nun zwischen Dichtring und Öffnungsausschnitt der Bohrung hindurchfließt, zusetzen, bis schließlich ein Öffnen und Schließen des Hahns nicht mehr möglich ist.

Zur Minimierung der Toträume sind verschiedene Vorschläge gemacht worden. So werden beim Einbau der Kugel in das Gehäuse die Toträume verfüllt. Damit der Hahn aber zuverlässig arbeiten kann, muß trotzdem ein gewisser Spalt zwischen Kugel und Verfüllmaterial verbleiben, der sich somit immer noch zusetzen kann.

Zudem dringt Material aus den Toträumen in den Bereich zwischen Spindel und Gehäuse. Da es sich bei dem Strömungsmedium um abrasive oder klebrige bzw. auskristallisierende Materialien handeln kann, ist abzusehen, wann ein Betätigen der Spindel unmöglich wird.

Darüber hinaus ist es gerade bei Kugelhähnen großer Nennweiten und bei höheren Drücken notwendig, die schwere Kugel durch ein Fußlager zu stützen. Auch in diesen Bereich gelangt bei den bekannten Kugelhähnen das Medium und setzt ihn zu.

Aufgabe der Erfindung ist es daher, einen Kugelhahn der eingangs genannten Art so auszugestalten, daß das Eindringen von Medium in die Toträume und von dort aus weiter in den Bereich der Spindel bzw. eines Fußlagers von vornherein ausgeschlossen ist, um somit die Standzeit des Hahns und seine Betriebssicherheit zu erhöhen.

Die Erfindung löst diese Aufgabe dadurch, daß die weiteren ringförmigen Dichtungen auf der Kugeloberfläche aufsitzen und diese Dichtungsringe den Dichtungsringen an ihren jeweiligen Scheitelpunkten unmittelbar benachbart sind und die Kugel an der von der Spindel abgewandten Seite mittels eines Pußlagers im Gehäuse gelagert ist.

Die beiden zusätzlichen Dichtungen sind in einander parallelen Ebenen angeordnet, wobei diese Ebenen senkrecht zu den von den in Strömungsrichtung vor und hinter der Kugel angeordneten Dichtringen aufgespannten Ebenen liegen. Beim Drehen der Kugel liegen diese beiden zusätzlichen Dichtungen somit permanent dichtend auf und verhindern, daß das beim Öffnen des Hahns zwischen den in Strömungsrichtung hintereinander angeordneten Dichtungsringen und dem Öffnungsausschnitt der Kugelbohrung abfließende Medium in die hinter den zusätzlichen Dichtungen liegenden Toträume eindringen kann. Somit ist gewährleistet, daß sich die Toträume nicht zusetzen können, so daß eine Behinderung der Schließ- und Öffnungsbewegung hierdurch nicht erfolgen kann. Ein weiterer Vorteil der Erfindung ist es, daß es durch die Dichtungen verhindert wird, daß Medium bis in den Spindelbereich bzw. den Fußlagerbereich vordringt und durch Zusetzen derselben die Bewegungsfähigkeit von Spindel und Kugel einschränkt bzw. unmöglich macht.

Der erfindungsgemäße Kugelhahn weist eine totraumminimierte Ausgestaltung auf, was im Gegensatz von Verfüllungen und dem Einsatz von Lagerschalen schon aus fertigungstechnischen Gründen von Vorteil ist. Im Gegensatz zu bisherigen Kugelhähnen können sie auch bei Verwendung von metallischen Dichtsitzen totraumminimiert ausgestaltet sein.

Ein weiterer Vorteil der erfindungsgemäßen Ausgestaltung ist in den vielfältigen Kontrollmöglichkeiten durch den Einsatz geeigneter Sonden im Bereich zwischen den einander benachbarten Kugel-Dichtungen zu sehen. Die durch die einander benachbarten Dichtsitze, die Kugeloberfläche und die Gehäusewand begrenzte Kammer wird beim Schaltvorgang mit Medium gefüllt. Nach Erreichen der Endstellungen kann über diverse Anschlüsse ein Spülvorgang, eine Evakuierung o. ä. durchgeführt werden. Dabei ist der minimierte Totraum von großer Bedeutung, da nur geringe Mengen Fördermedium entfernt werden müssen, und nur geringe Mengen Spülflüssigkeit das Fördermedium verunreinigen.

Die Kontrollmöglichkeiten beziehen sich weiterhin auf die Dichtigkeit an sich und auf Druckverhältnisse und Mediumzustand zwischen den Dichtsitzen in Offenstellung.

Die Sonden und Sensoren können auch zwischen oberer Kugeldichtung und Spindeldichtung angeordnet werden, die Aussagen über etwaige Leckagen machen können

Die Bohrung in der Kugel kann als Sacklochbohrung ausgebildet sein, wenn der Hahn lediglich zu einem Probeentnahmesystem gehört.

Ansonsten ist die Bohrung durchgängig ausgeführt, wenn es sich nicht gerade um einen Dreiwege-Hahn handelt. In diesem Fall ist die Bohrung entsprechend komplexer.

Die Erfindung wird im folgenden anhand von Zeichnungen dargestellt und näher erläutert.

Es zeigen:
- Fig. 1: Kugelhahn im Längsschnitt (in Offenstellung)
- Fig. 2: Kugelhahn gemäß Fig. 1 mit Dichtsystem in perspektivischer Darstellung (Prinzipdarstellung)
- Fig. 3: Kugel mit Dichtsystem gemäß Fig.2 in einer Zwischenstellung.

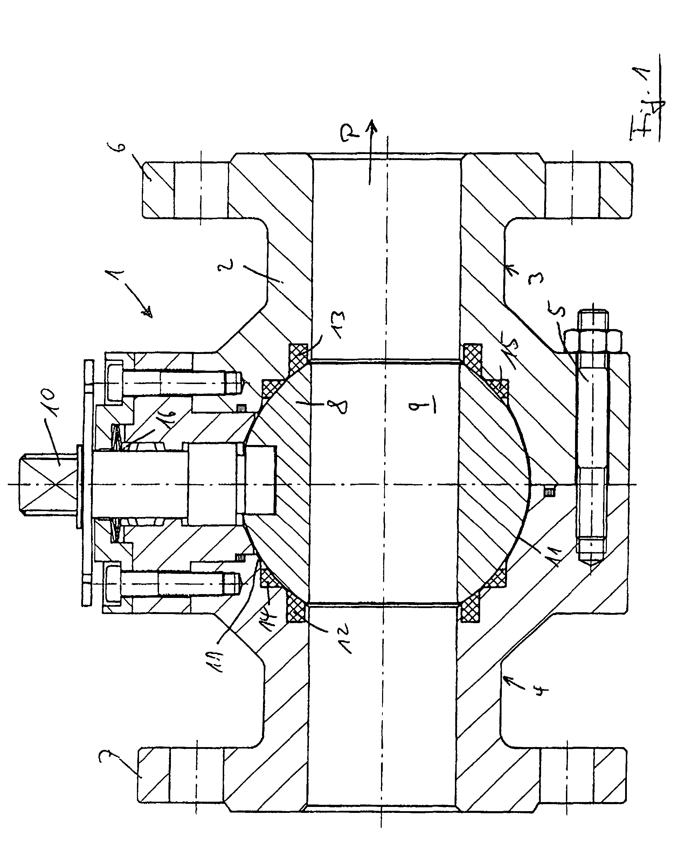

In den Figuren 1 bis 3 ist ein Kugelhahn dargestellt und allgemein mit dem Bezugszeichen 1 versehen. Er besteht aus einem geteilten Gehäuse 2, dessen Gehäuseteile 3 und 4 mittels Schraubenbolzen 5 miteinander verbunden werden. An beiden Enden des Gehäuses 2 befinden sich Flansche 6 und 7, an die die Enden der Rohrleitungen angeflanscht werden, durch die das zu führende Medium strömt.

Innerhalb des Gehäuses ist eine Kugel 8 drehbar gelagert. Die im Durchmesser dem Rohrleitungsdurchmesser entsprechende Durchgangsbohrung in der Kugel 8 ist mit dem Bezugszeichen 9 versehen.

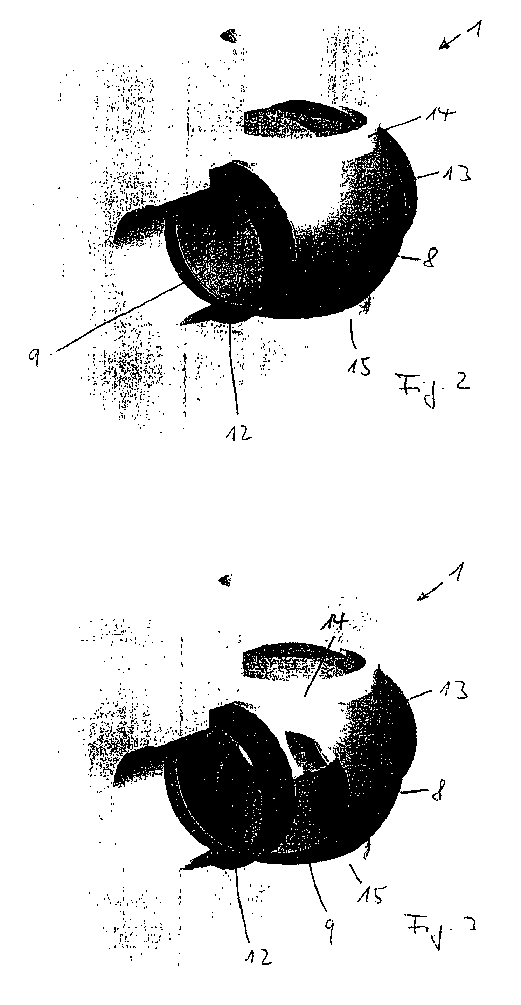

Im oberen Teil des Gehäuses 2 ist eine Spindel 10 gelagert, die mit der Kugel 8 drehfest verbunden ist. Beispielsweise mittels eines nicht dargestellten Handgriffs am freien Ende der Spindel 10 wird dieselbe und damit die Kugel 8 verdreht. Die Toträume 11 zwischen Kugel 8 und Gehäusewand sind auf ein Minimum reduziert, In Strömungsrichtüng (P) vor und hinter der Kugel 8 sind im Gehäuse 2 Ringdichtungen 12 und 13 angeordnet, die parallel zur Strömungsfront angeordnet sind, also in der Geschlossenstellung des Kugelhahns 1 auf der Kugeloberfläche dichtend aufliegen, ebenso wie in der Öffnungsstellung, wenn sie die Durchgangsbohrungsöffnung konzentrisch umgeben (Fig.2).

In den Zwischenstellungen zwischen Offen- und Geschlossenstellung (Fig.3) verlieren diese Dichtungen 12 und 13 jedoch teilweise ihre Wirkung, und Medium strömt zwischen der Dichtung 12 und der Durchgangsbohrungsöffnung in die Toträume 11 und setzt sie zu. Darüber hinaus dringt das Medium von dort weiter bis zur Spindel 10 bzw., wenn die Kugel 8 (gerade bei Kugelhähnen für große Nennweiten) mittels eines nicht dargestellten Fußlagers gestützt wird, auch bis in den Bereich des Lagers.

Um dies zu verhindern, sind im Gehäuse 2 oberhalb und unterhalb der Dichtringe 12 und 13 und oberhalb und unterhalb der Durchgangsbohrung zusätzliche Dichtungsringe 14 und 15 in zwei zueinander parallelen Ebenen angeordnet, wobei diese Ebenen senkrecht zu den von den Dichtringen 12 und 13 aufgespannten Ebenen liegen.

Wenn nun in einer Zwischenstellung (Fig.3) Medium zwischen Dichtring 12 und Durchgangsbohrungsöffnung hindurch fließt, dringt es lediglich bis zu den Dichtringen 14 und 15 vor, die bei jeder Schaltstellung und allen Zwischenstellungen immer dichtenden Kontakt mit der Kugeloberfläche haben. Ein weiteres Vordringen des Mediums bis in die Toträume oder gar bis zur Spindel bzw. zum Fußlager ist so gut wie ausgeschlossen.

Wie von der TA-Luft vorgeschrieben, befindet sich ein weiteres Dichtungssystem 16 im Bereich der Spindel 10, das für die atmosphärenseitige Abdichtung verantwortlich ist.

Die Wahl des Dichtungsmaterials hängt von den jeweiligen Einsatzzwecken und -bedingungen ab. Möglich sind metallische und keramische Dichtungssysteme sowie weichdichtende (PTFE)-Systeme.

## Patentansprüche

1. Kugelhahn zur Absperrung von flüssige, gasförmige und feststoffbeladene Medien führenden Rohrleitungen großer Nennweiten, bestehend aus einem Gehäuse (2), in dem die mit mindestens einer Bohrung (9) versehene, mittels einer Spindel (10) im Gehäuse (2) verdrehbar gelagerte Kugel (8) angeordnet ist und in Strömungsrichtung vor und hinter der Kugel (8) im Gehäuse (2) ringförmige, die Anströmseite gegen die Abströmseite abdichtende Dichtungen (12,13) und in Ebenen senkrecht zur Spindelachse oberhalb und unterhalb der Bohrung (9) sowie oberhalb und unterhalb der in Strömungsrichtung vor und hinter der Kugel (8) angeordneten Dichtungen (12,13) je eine weitere Dichtung (14,15) derart angeordnet ist, daß die von ihnen aufgespannten, parallel zueinander liegenden Ebenen jeweils senkrecht auf den von den vor und hinter der Kugel (8) angeordneten Dichtungen (12,13) aufgespannten Ebenen liegen,
**dadurch gekennzeichnet,**
**daß** die weiteren ringförmigen Dichtungen (14,15) auf der Kugeloberfläche aufsitzen und diese weiteren Dichtungsringe (14 und 15) den Dichtungsringen (12 und 13) an ihren jeweiligen Scheitelpunkten unmittelbar benachbart sind und die Kugel (8) an der von der Spindel (10) abgewandten Seite mittels eines Fußlagers im Gehäuse (2) gelagert ist.

2. Kugelhahn nach Anspruch 1,
**dadurch gekennzeichnet,**
**daß** die Spindel (10) mit einer zusätzlichen Dichtung (16), die im Gehäuse (2) zwischen dem auf der Kugeloberfläche aufsitzenden Dichtring (14) und dem antriebseitigen Ende der Spindel (10) angeordnet ist, atmosphärenseitig abgedichtet ist.

3. Kugelhahn nach Anspruch 1 oder 2,
**dadurch gekennzeichnet,**
**daß** als Material für die Dichtringe Hartmetall und/oder Keramik und/oder weichdichtendes Material und/oder Kohle verwendet wird.

4. Kugelhahn nach einem der Ansprüche 1 bis 3,
**dadurch gekennzeichnet,**
**daß** die Dichtungsringe (12,13) und/oder die Dichtungsringen (14,15) federnd unterstützt auf die Kugeloberfläche andrückbar sind.

5. Kugelhahn nach einem der Ansprüche 1 bis 4,
**dadurch gekennzeichnet,**
**daß** zumindest im Bereich zwischen den Dichtringen (12, 14) Kontrollsonden angeordnet sind.

6. Kugelhahn nach einem der Ansprüche 1 bis 5,
**dadurch gekennzeichnet,**
**daß** die Bohrung (9) in der Kugel (8) eine Sacklochbohrung ist.

7. Kugelhahn nach einem der Ansprüche 1 bis 5,
**dadurch gekennzeichnet,**
**daß** die Bohrung (9) in der Kugel (8) durchgängig ausgebildet ist.

## Claims

1. A ball valve for shutting off pipes of large nominal diameter conveying liquid, gaseous and particle-laden media, comprising a housing (2) in which the ball (8) provided with at least one bore (9) and rotatably mounted in the housing (2) by means of a spindle (10) is arranged, and annular seals (12, 13) sealing off the inflow side from the outflow side are arranged in the housing (2) upstream and downstream of the ball (8) in the flow direction, and, in planes perpendicular to the spindle axis above and below the bore (9) and above and below the seals (12, 13) arranged upstream and downstream of the ball (8) in the flow direction, respective further seals (14, 15) are arranged so that the parallel planes spanned by them in each case extend perpendicularly to the planes spanned by the seals (12, 13) arranged upstream and downstream of the ball (8), **characterised in that** the further annular seals (14, 15) sit on the surface of the ball, and these further sealing rings (14 and 15) are directly adjacent to the sealing rings (12 and 13) at their respective vertices, and the ball (8) is mounted in the housing (2) by means of a step bearing on the side remote from the spindle (10).

2. A ball valve according to claim 1, **characterised in that** the spindle (10) is sealed off from the atmosphere by an additional seal (16) arranged in the housing (2) between the sealing ring (14), which sits on the surface of the ball, and the driving end of the spindle (10).

3. A ball valve according to claim 1 or 2, **characterised in that** hard metal and/or ceramic and/or soft-sealing material and/or carbon is used as material for the sealing rings.

4. A ball valve according to any one of claims 1 to 3, **characterised in that** the sealing rings (12, 13) and/or the sealing rings (14, 15) are resiliently supported and pressable onto the surface of the ball.

5. A ball valve according to any one of claims 1 to 4, **characterised in that** monitoring probes are arranged at least in the region between the sealing rings (12, 14).

6. A ball valve according to any one of claims 1 to 5, **characterised in that** the bore (9) in the ball (8) is a blind bore.

7. A ball valve according to any one of claims 1 to 5, **characterised in that** the bore (9) in the ball (8) is a through bore.

## Revendications

1. Robinet à boisseau sphérique pour fermer des tuyauteries de grand diamètre nominal transportant des fluides liquides, gazeux et chargés de matières solides, constitué d'un boîtier (2) dans lequel est disposé le boisseau sphérique (8) pourvu d'au moins un perçage (9) et pouvant tourner dans le boîtier (2) au moyen d'une broche (10), ainsi que de garnitures d'étanchéité (12, 13) de forme annulaire rendant étanche le côté arrivée par rapport au côté départ et disposées en amont et en aval, dans le sens d'écoulement, du boisseau sphérique (8) dans le boîtier (2), et dans des plans perpendiculaires à l'axe de la broche, au-dessus et au-dessous du perçage (9), ainsi qu'au-dessus et au-dessous des garnitures d'étanchéité (12, 13) disposées en amont et en aval, dans le sens d'écoulement, du boisseau (8), est disposée une autre garniture d'étanchéité (14, 15) respective de manière que les plans parallèles les uns aux autres, définis par celles-ci, soient chacun perpendiculaires aux plans définis par les garnitures d'étanchéité (12, 13) disposées en amont et en aval du boisseau sphérique (8),
**caractérisé**
**en ce que** les autres garnitures d'étanchéité (14, 15) de forme annulaire reposent sur la surface du boisseau et ces autres bagues d'étanchéité (14 et 15) sont directement adjacentes aux bagues d'étanchéité (12 et 13) en leurs sommets respectifs, et le boisseau sphérique (8) est monté sur le côté tourné à l'opposé de la broche (10), au moyen d'un palier inférieur dans le boîtier (2).

2. Robinet à boisseau sphérique selon la revendication 1,
**caractérisé**
**en ce que** la broche (10) est rendue étanche côté atmosphère au moyen d'une garniture d'étanchéité (16) supplémentaire qui est disposée dans le boîtier (2) entre la bague d'étanchéité (14) reposant sur la surface du boisseau et l'extrémité côté entraînement de la broche (10).

3. Robinet à boisseau sphérique selon la revendication 1 ou 2,
**caractérisé**
**en ce qu'**on utilise comme matériau pour les bagues d'étanchéité un métal dur et/ou une céramique et/ou un matériau d'étanchéité souple et/ou du charbon.

4. Robinet à boisseau sphérique selon l'une des revendications 1 à 3,
**caractérisé**
**en ce que** les bagues d'étanchéité (12, 13) et/ou les bagues d'étanchéité (14, 15) sont apte à être pressées, maintenues élastiquement, sur la surface du boisseau.

5. Robinet à boisseau sphérique selon l'une des revendications 1 à 4,
**caractérisé**
**en ce que** des sondes de contrôle sont disposées au moins dans la zone comprise entre les bagues d'étanchéité (12, 14).

6. Robinet à boisseau sphérique selon l'une des revendications 1 à 5,
**caractérisé**
**en ce que** le perçage (9) dans le boisseau (8) est un trou borgne.

7. Robinet à boisseau sphérique selon l'une des revendications 1 à 5,
**caractérisé**
**en ce que** le perçage (9) dans le boisseau sphérique (8) est traversant.
